# EUROPEAN PATENT SPECIFICATION

(11) **EP 2 954 970 B1**
(45) Date of publication and mention of the grant of the patent: **01.03.2017**
(21) Application number: 14382218.7
(22) Date of filing: 12.06.2014
(51) Int. Cl.: B23K 11/11, B23K 11/25, B23K 31/12

(54) **Method of optimizing welding parameters in resistance welding processes and computer program thereof**
Verfahren zur Optimierung von Schweißparametern bei Widerstandsschweißverfahren und Computerprogramm dafür
Procédé d'optimisation des paramètres de soudage dans des processus de soudage par résistance et programme informatique associé

(43) Date of publication of application: 16.12.2015
(73) Proprietor: Serra Soldadura, Sau, 08040 Barcelona (ES)
(72) Inventor: Gómez Canadell, Romà, 08202 Sabadell (ES)
(74) Representative: Juncosa Miro, Jaime

(56) References cited:
- EP-A2- 1 249 298
- CN-A- 102 107 323
- US-A1- 2010 065 533
- US-B1- 8 357 870

## Description

### Field of the Art

The present invention generally relates to a method of optimizing parameters of a resistance spot welding process on base materials such as steels (carbon-iron alloy) in any of the compositions (see claim 1), and a computer method (see claim 11).

### Background of the Invention

In resistance welding processes, such as in spot welding, applying a generally constant, high-intensity welding current pulse (Fig. la) for a certain time period to superimposed steel plates or metal elements to be welded is generally known. However, experience has shown that the preceding welding method described can be unstable if there is a sudden initial increase in energy generated by said welding current pulse which, due to differences existing in contact resistance, cause an outward expulsion of the metal elements to be welded and the subsequent weakening of the welded joint.

EP 1 249 298, on which the preamble of claims 1 and 11 is based, discloses a device, and a method, for determining the quality of pressure welding and fusion welding processes, especially resistance welding processes and/or the quality of the welding joints produced. Said device comprises a stream determination unit for determining the stream which flows through the welding point or which is correlated with the power production on the welding point, an evaluation unit connected to the stream determination unit, and a correlation unit.

US 2010/065533 discloses a resistance weld control employing a model-based run-to-run estimate of load impedance, giving the weld control system the ability to maintain and predict the expected impedance of a successfully completed resistance spot weld, and to detect when the load impedance observed by the resistance weld control is within a target neighborhood of that impendance predicted by the model-based run-to-run estimate of load impedance. A target weld current and a range of weld times may be specified, such that the actual weld time employed in making the resistance spot weld is responsive to the time required to complete the contact preparation phase. Further, a fixed weld time and a range of target weld currents may be specified to make a resistance spot weld, such that the actual target weld current employed is responsive to the time required to complete the contact preparation phase of the weld.

US 8 357 870 discloses an intelligent stepper system and method for controlling weld current in a welding operation includes a welder welding a plurality of spot welds in succession and a controller incrementally increasing the weld current by a first fixed amount or percentage at each of the plurality of spot welds. Weld spatter is sensed at each of the plurality of spot welds and weld current is decreased by a second fixed amount or percentage when weld spatter is sensed.

It therefore seems necessary to obtain resistance spot welding processes which, based on energy and time values which are accepted as sufficient (weld that can be considered correct), allowing modifying the welding current supply such that optimal energy that does not give rise to the described problems is obtained.

### Description of the Invention

Based on experience obtained in performing the preceding resistance spot welding processes described above, the present inventors have found that weld of this type is optimal, when the obtained energy increases progressively, acquires a maximum level and then starts to drop with similar downward and upward gradients.

For that purpose, a first aspect of the present invention provides a method of optimizing resistance spot welding parameters as defined in claim 1. To that end, according to known techniques in the field, in the proposed method a welding current pulse of certain generally constant intensity, is applied to superimposed metal elements to be welded and in each of a series of pre-established spots of a resistance welding sequence, for a certain time period until obtaining an acceptable weld.

Characteristically, based on a given welding current pulse (constant current) or on a starting welding current pulse that already provides a weld that is considered to be correct or acceptable, the proposed method performs the following actions:
- first applying two successive or consecutive welding current pulses to each subsequent spot of the welding sequence:
   o a first welding current pulse obtained by voltage profile monitoring supplying energy that is less than the energy provided by said given welding current pulse, and
   ∘ a second current pulse coinciding with said given welding current pulse.

Then the mentioned application of two successive welding current pulses is repeated for each spot, adjusting in each repetition the first welding current pulse value in voltage profile monitoring (increasing the voltage value in a step-wise manner), until said first welding current pulse in voltage profile monitoring attains an energy value in a final adjustment equivalent to said given or starting welding current pulse.

After said time, an equal welding current pulse corresponding to the welding current pulse of said final adjustment is applied to the metal elements to be welded, in the subsequent welds of the welding sequence, in each spot.

In one embodiment of the proposed method, the energy provided by said starting welding current pulse and said certain time period of the pulse are stored in a memory of a computing device before the two successive welding current pulses are applied.

Furthermore, and according to one embodiment, the first welding current pulse in voltage profile monitoring is applied with a reduction in duration of about 10% with respect to said time period of the starting welding current pulse. Preferably, said reduction is performed with an exact duration of 10% with respect to the time period of the starting welding current pulse.

The proposed method performs repetitions, applying the two successive welding current pulses preferably until said equivalent value attained by the first welding current pulse in voltage profile monitoring is in a range of -5% to +10% of the energy value provided by said given welding current pulse.

The proposed method successfully adjusts the welding current pulse value in voltage profile monitoring, which gradually approximates said starting welding current pulse value, in the smallest number of repetitions possible. Nevertheless, and since this is a completely dynamic process in which welding conditions are different in each welding sequence, for example due to the fact that contact resistance is never exactly the same, the number of repetitions will be an undetermined number. In any case, the repetition of the two successive welding current pulses will not exceed 10.

According to a preferred embodiment, the repetition of sequences of two successive or consecutive welding current pulses is performed between 3 and 6 times.

Particularly, the metal elements to be welded comprise a steel material of any type and in any of the compositions thereof, in different numbers of metal sheets. Nevertheless, the proposed method can be extrapolated to resistance welding with other types of materials other than steel.

In a second aspect, the invention relates to a computer program as defined in claim 11, including code instructions which, when run in a computer, optimize the given welding current parameter which is replaced with a welding current parameter in voltage profile monitoring according to the method of the first aspect.

The various aspects of the present invention therefore allow automatically optimizing the parameters of a resistance spot welding process. The invention completely and automatically optimizes a welding process of this type, reducing a manual task that can currently take up to an hour to just a few minutes, depending on the user's degree of experience.

Furthermore, the replacement of the conventional welding current parameter that does not provide an optimal energy supply with a current curve generating an energy supply like that described, allows greater repeatability of the welding conditions, greater process stability and a reduction/elimination of unwanted projections of the base material that weaken the mechanical strength of the welded joint. In short, the invention optimizes a weld made based on energy data (intensity and voltage) and time of an already existing weld.

### Brief Description of the Drawings

The foregoing and other features and advantages will be better understood based on the following detailed description of embodiments in reference to the attached drawings in which:
Fig. la shows a curve, with a certain constant value, of the welding current intensity applied for a certain time period to metal elements to be welded in a resistance welding.
Fig. lb shows the voltage curve corresponding to the previous application of the welding current intensity to said metal elements to be welded.

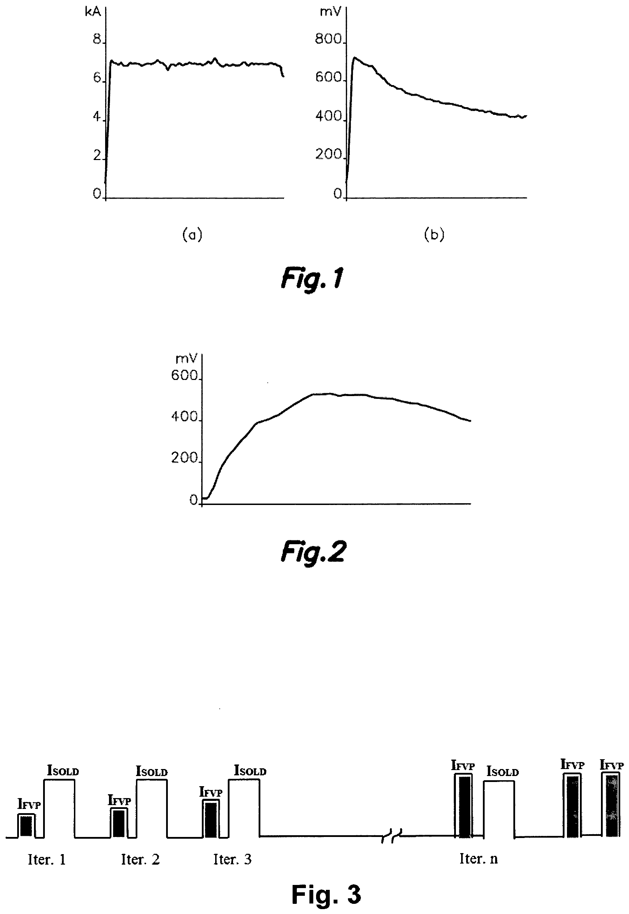

Fig. 2 depicts an optimal voltage curve in a resistance spot weld in a steel material.
Fig. 3 shows an example of repetition according to the proposed method by applying for a certain time period two successive welding current pulses for each spot to be welded until reaching an optimal current pulse value, which is later maintained for successive spots to be welded, according to one embodiment.

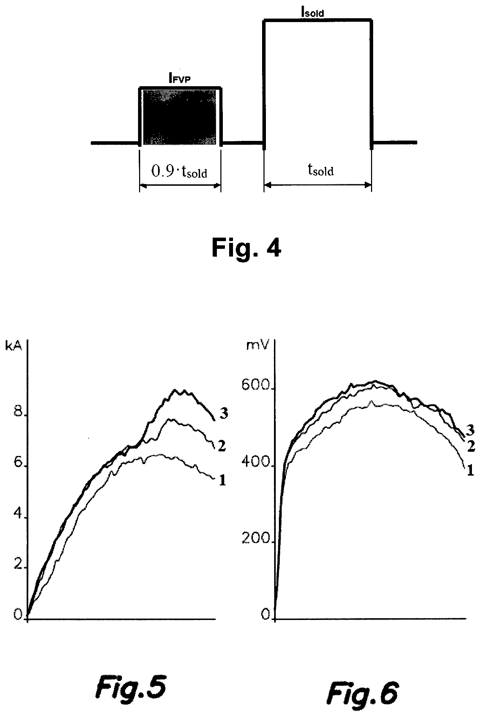

Fig. 4 is an enlargement of a pair of pulses of one of the repetitions shown in Fig. 3, according to a preferred embodiment, when the first welding current pulse in voltage profile monitoring is performed with a reduction in duration of 10% with respect to the second given or starting welding current pulse.
Fig. 5 shows several welding current curves provided by the mentioned current pulses in voltage profile monitoring, obtained from the voltage curves of Fig. 6. The curve indicated with reference number 3 in Fig. 5 is the one providing a welding energy that virtually coincides with the original weld made with a constant welding current (given or starting welding pulse).

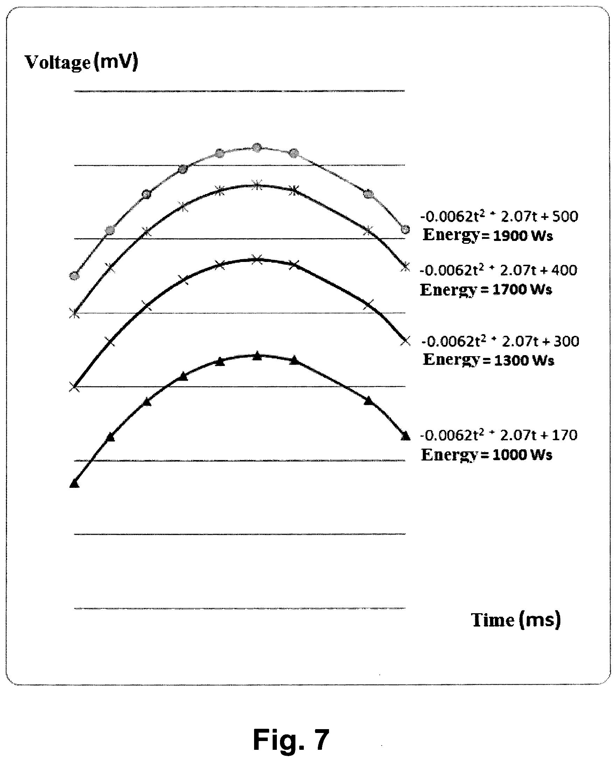

Fig. 7 shows voltage curves applied in several repetitions to provide current pulses in said voltage monitoring.

### Detailed Description of the Invention and of several Embodiments

In any resistance welding that is accepted as correct (but not optimal), the energy value measured in the process gives an idea about the minimum energy value that said weld assures to a greater or lesser extent. Assuming that this energy provided generates a 'sufficient' resistance welding spot, the invention proposes modifying the current that is supplied, which is substantially constant in that given welding spot as acceptable or sufficient, so that the energy is supplied in an optimal manner, i.e., with a corresponding voltage curve similar to that shown in Fig. 2.

Once a weld considered to be valid is obtained and based on a corresponding constant given welding current pulse I_{sold} sufficient for generating said valid weld, the method of the first aspect of the invention proposes performing in each subsequent spot of a resistance spot welding operation, a particular sequence comprising for each welding spot to be welded the application of a pair of welding current pulses, comprising a first welding current pulse I_{FVP} in voltage profile monitoring (FVP) and a second welding current pulse I_{sold} coinciding with said given welding current pulse considered to be sufficient.

Said welding sequence with pairs of welding current pulses I_{FVP}, I_{sold} is repeated consecutively in each spot, increasing in each repetition the energy value associated with the first welding current pulse I_{FVP} until it reaches a value that is equivalent, i.e., very close, to the starting welding current pulse I_{sold}. The system will gradually perform repetitions until the first welding current pulse I_{FVP} is between -5% and +10% of the energy provided by the welding current I_{sold.,} without this being limiting.

The method will preferably reach the starting energy value in the smallest number of repetitions possible. Nevertheless, and since this is a completely dynamic process in which welding conditions are different in each welding sequence, primarily due to the fact that contact resistance is never exactly the same, the number of repetitions with pairs of welding current pulses I_{FVP}, I_{sold} that the method will perform can even be an undetermined number. In any case, in the proposed method the number of repetitions with pairs of welding pulses I_{FVP}, I_{sold} cannot exceed 10 repetitions. The number of double pulse I_{FVP}, I_{sold} repetitions generally comprises between 3 and 6 repetitions.

An example of the method described above can be seen in Fig. 3, where it can be seen that as the number of double pulse I_{FVP}, I_{sold} repetitions increases, the energy of the first welding current pulse I_{FVP} progressively approximates pulse I_{sold}. As indicated previously, the process ends when the energy of the first pulse I_{FVP} reaches approximately the energy of the starting weld. Once the method attains such objective, the welding current I_{FVP} value in the final repetition (see Fig. 5) is what will be applied in each spot of the subsequent welds of the welding sequence (see Fig. 3). On the right side in Fig. 3, it can be seen how, after a certain time, resistance spot welding comprises the application of only the welding current pulse I_{FVP} that was found by this method.

The mentioned first welding current pulse I_{FVP} performs a first approximation with respect to energy value provided by the welding current I_{sold} with the particularity that, according to a preferred embodiment, see Fig. 4, it is applied with a duration in time that is 10% less than that of the second welding current pulse I_{sold}. When applying the method, welding spot quality is unaltered precisely due to applying the second current pulse I_{sold}.

The pairs of welding current pulses I_{FVP}, I_{sold} are applied with a time interval that is a function of conventional times of a welding sequence, known as cooling time and clamping time, which are standard for the welding sequence. In any case, this time interval is irrelevant in the process and insignificant with respect to the production process.

According to one embodiment, at the exact time of activating the method, i.e., before performing a resistance spot welding sequence with pairs of welding current pulses (repetition process), the energy provided by the welding current pulse I_{sold} and the time of duration of said pulse are stored in a memory of a computing device. As an improvement of the invention, the memory could be accessible through a communication network, for example from a cloud-type infrastructure.

The first welding current pulse I_{FVP} in voltage profile monitoring preferably, and in a non-limiting manner because other functions could be tested, corresponds with a voltage curve following a polynomial function of degree 2 (Fig. 7). This curve is the result of the experience acquired in resistance welding processes carried out by the inventors for materials such as steels in all the compositions thereof, without being limited thereto.

The proposed method can be implemented in hardware, software, firmware or any combination thereof. If it is applied in software, the functions can be stored in or coded as one or more instructions or code in a medium that can be read by a computer. Particularly, the method of the first aspect of the invention is implemented using special software designed for this purpose referred to as OptimalSystem. This software automatically controls optimization of the welding current parameter I_{sold} by the adjusted welding current parameter I_{FVP}.

The scope of this invention is defined in the following set of claims.

## Claims

1. A method of optimizing resistance welding parameters, the method comprising applying a welding current pulse of a certain intensity (I_{sold}) for a certain time period (t_{sold}) to superimposed metal elements to be welded and in a series of pre-established spots of a resistance spot welding sequence, wherein the method being **characterized in that** it comprises, based on a given current pulse (I_{sold}) providing a weld that is considered to be correct, performing the following actions:
- applying two successive welding current pulses to each subsequent spot of the welding sequence:
a first welding current pulse (I_{FVP}) obtained by voltage profile monitoring supplying energy that is less than the energy provided by said given pulse (I_{sold}), and
a second welding current pulse coinciding with said given pulse (I_{sold});
- repeating said application of two successive welding current pulses (I_{FVP}) and (I_{sold}) for each spot to be welded, adjusting by increasing in each repetition the first welding current pulse (I_{FVP}) value, in voltage profile monitoring, increasing the voltage value in a step-wise manner until said first welding current pulse (I_{FVP}) attains an energy value in a final adjustment equivalent to said given welding current pulse (I_{sold}); and
- applying to said metal elements to be welded, in the subsequent welds of said welding sequence, one welding current pulse for each spot having a welding current intensity value corresponding to the welding current pulse (I_{FVP}) in voltage profile monitoring of said final adjustment, wherein the first welding current pulse (I_{FVP}) throughout said repetitions in voltage profile monitoring being obtained from voltage curves following preferably a polynomial function of degree 2.

2. The method according to claim 1, **characterized in that** the energy supplied by said welding current pulse (I_{sold}) and said certain time period (t_{sold}) are stored in a memory of a computing device before applying the pairs of successive welding current pulses, (I_{sold}) and (I_{FVP}), in repetition.

3. The method according to any of the preceding claims, **characterized in that** the first welding current pulse (I_{FVP}) is applied with a reduction in duration of about 10% with respect to said time period (t_{sold}).

4. The method according to any of claim 1 or 2, **characterized in that** the first welding current pulse (I_{FVP}) is applied with a reduction in duration of 10% with respect to said time period (t_{sold}).

5. The method according to claim 1 or 2, **characterized in that** said equivalent value attained by the first welding current pulse (I_{FVP}) after several repetitions is comprised in a range of -5% to +10% of the energy value provided by said given welding current pulse (I_{sold}).

6. The method according to one of claims 1 to 4, **characterized in that** it comprises performing said repetition of the two successive welding current pulses a maximum of 10 times.

7. The method according to claim 6, **characterized in that** it comprises performing said repetition of the two successive welding current pulses between 3 and 6 times.

8. The method according to one of claims 1 to 4, **characterized in that** the pairs of successive welding current pulses (I_{sold}) and (I_{FVP}) are applied with a time interval between them that is a function of cooling times, known as cooling time and clamping time, which are standard for the welding sequence.

9. The method according to any of the preceding claims, **characterized in that** the metal elements to be welded comprise a steel material.

10. The method according to claim 9, **characterized in that** the parts to be welded comprise two or more superimposed metal sheets.

11. A computer program including code instructions which, when run in a computer, implements a method of optimizing resistance welding parameters by applying a welding current pulse of a certain intensity (I_{sold}) for a certain time period (t_{sold}) to superimposed metal elements to be welded and in a series of pre-established spots of a resistance spot welding sequence, based on a given current pulse (I_{sold}) providing a weld that is considered to be correct, **characterised by** performing the following actions:
- applying two successive welding current pulses to each subsequent spot of the welding sequence:
a first welding current pulse (I_{FVP}) obtained by voltage profile monitoring supplying energy that is less than the energy provided by said given pulse (I_{sold}); and
a second welding current pulse coinciding with said given pulse (I_{sold});
- repeating said application of two successive welding current pulses (I_{FVP}) and (I_{sold}) for each spot to be welded, adjusting by increasing in each repetition the first welding current pulse (I_{FVP}) value, in voltage profile monitoring, increasing the voltage value in a step-wise manner until said first welding current pulse (I_{FVP}) attains an energy value in a final adjustment equivalent to said given welding current pulse (I_{sold}); and
- applying to said metal elements to be welded, in the subsequent welds of said welding sequence, one welding current pulse for each spot having a welding current intensity value corresponding to the welding current pulse (I_{FVP}) in voltage profile monitoring of said final adjustment,
wherein the first welding current pulse (I_{FVP}) throughout said repetitions in voltage profile monitoring being obtained from voltage curves following preferably a polynomial function of degree 2.

## Patentansprüche

1. Verfahren zur Optimierung von Widerstandsschweißparametern, wobei das Verfahren das Anlegen eines Schweißstromimpulses mit einer gewissen Intensität (I_{sold}) für einen gewissen Zeitraum (t_{sold}) auf zu verschweißenden übereinanderliegenden Metallelementen und in einer Reihe von zuvor festgestellten Punkten einer Widerstandspunktschweißabfolge umfasst, wobei das Verfahren **dadurch gekennzeichnet ist, dass** es, basierend auf einem gegebenen Stromimpuls (I_{sold}), das Bereitstellen einer für richtig gehaltene Schweißnaht umfasst, unter Durchführung der folgenden Vorgänge:
- das Anlegen zweier aufeinanderfolgenden Schweißstromimpulse auf jedem nachfolgenden Punkt der Schweißabfolge:
eines ersten durch Spannungsprofilüberwachung erhaltenen Schweißstromimpulses (I_{FVP}) unter Zuführung einer Energie, welche geringer ist als die vom genannten gegebenen Impuls (I_{sold}) bereitgestellte Energie, und
eines zweiten Schweißstromimpulses, welches mit dem genannten gegebenen Impuls (I_{sold}) übereinstimmt;
- das Wiederholen des genannten Anlegens zweier aufeinanderfolgenden Schweißstromimpulse (I_{FVP}) und (I_{sold}) für jeden zu verschweißenden Punkt, unter Einstellung durch Erhöhung, bei jeder Wiederholung, des Wertes des ersten Schweißstromimpulses (I_{FVP}), bei der Spannungsprofilüberwachung, durch schrittweise Erhöhung des Spannungswertes bis der genannte erste Schweißstromimpuls (I_{FVP}) einen Energiewert bei einer endgültigen Einstellung erreicht, der dem genannten gegebenen Schweißstromimpuls (I_{sold}) gleich ist; und
- das Anlegen auf den genannten zu verschweißenden Metallelementen, bei den nachfolgenden Schweißnähten der genannten Schweißabfolge, eines Schweißstromimpulses für jeden Punkt mit einem Schweißstromintensitätswert, der dem Schweißstromimpuls (I_{FVP}) bei der Spannungsprofilüberwachung der genannten endgültigen Einstellung entspricht,
wobei der erste Schweißstromimpuls (I_{FVP}) während der genannten Wiederholungen bei der Spannungsprofilüberwachung aus Spannungskurven erhalten wird, welche vorzugsweise eine Polynomfunktion zweiten Grades folgen.

2. Verfahren nach Anspruch 1, **dadurch gekennzeichnet, dass** die vom genannten Schweißstromimpuls (I_{sold}) und für einen gewissen Zeitraum (t_{sold}) zugeführte Energie in einem Speicher einer Computervorrichtung gespeichert wird, bevor die Paare von aufeinanderfolgenden Schweißstromimpulsen, (I_{sold}) und (I_{FVP}), wiederholt angelegt werden.

3. Verfahren nach einem der vorhergehenden Ansprüche, **dadurch gekennzeichnet, dass** der erste Schweißstromimpuls (I_{FVP}) mit einer Verringerung der Dauer von ungefähr 10% in Bezug auf den genannten Zeitraum (t_{sold}) angelegt wird.

4. Verfahren nach einem der Ansprüche 1 oder 2, **dadurch gekennzeichnet, dass** der erste Schweißstromimpuls (I_{FVP}) mit einer Verringerung der Dauer von 10% in Bezug auf den genannten Zeitraum (t_{sold}) angelegt wird.

5. Verfahren nach Anspruch 1 oder 2, **dadurch gekennzeichnet, dass** der genannte Gleichwert, welcher vom ersten Schweißstromimpuls (I_{FVP}) nach mehreren Wiederholungen erhalten wird, im Bereich von -5% bis +10% des vom genannten gegebenen Schweißstromimpuls (I_{sold}) bereitgestellten Energiewertes liegt.

6. Verfahren nach einem der Ansprüche 1 bis 4, **dadurch gekennzeichnet, dass** es die Durchführung der zwei aufeinanderfolgenden Schweißstromimpulse maximal 10 Mal umfasst.

7. Verfahren nach Anspruch 6, **dadurch gekennzeichnet, dass** es die Durchführung der genannten Wiederholung der zwei aufeinanderfolgenden Schweißstromimpulse zwischen 3 und 6 Mal umfasst.

8. Verfahren nach einem der Ansprüche 1 bis 4, **dadurch gekennzeichnet, dass** die Paare von aufeinanderfolgenden Schweißstromimpulsen (I_{sold}) und (I_{FVP}) mit einer Zeitspanne dazwischen angelegt werden, welche von den Abkühlzeiten abhängt, bekannt als Abkühlzeit und Schließzeit, welche für die Schweißabfolge gewöhnlich sind.

9. Verfahren nach einem der vorhergehenden Ansprüche, **dadurch gekennzeichnet, dass** die zu verschweißenden Metallelemente ein Stahlmaterial umfassen.

10. Verfahren nach Anspruch 9, **dadurch gekennzeichnet, dass** die zu verschweißenden Teile zwei oder mehr übereinanderliegende Metallbleche umfassen.

11. Computerprogramm enthaltend kodierte Befehle, welches, wenn es in einem Computer ausgeführt wird, ein Verfahren zur Optimierung von Widerstandsschweißparametern verwirklicht, durch das Anlegen eines Schweißstromimpulses mit einer gewissen Intensität (I_{sold}) für einen gewissen Zeitraum (t_{sold}) auf zu verschweißenden übereinanderliegenden Metallelementen und in einer Reihe von zuvor festgestellten Punkten einer Widerstandspunktschweißabfolge, basierend auf einem gegebenen Stromimpuls (I_{sold}), das Bereitstellen einer für richtig gehaltene Schweißnaht, **gekennzeichnet durch** die Durchführung der folgenden Vorgänge:
- das Anlegen zweier aufeinanderfolgenden Schweißstromimpulse auf jedem nachfolgenden Punkt der Schweißabfolge:
eines ersten **durch** Spannungsprofilüberwachung erhaltenen Schweißstromimpulses (I_{FVP}) unter Zuführung einer Energie, welche geringer ist als die vom genannten gegebenen Impuls (I_{sold}) bereitgestellte Energie; und
eines zweiten Schweißstromimpulses, welches mit dem genannten gegebenen Impuls (I_{sold}) übereinstimmt;
- das Wiederholen des genannten Anlegens zweier aufeinanderfolgenden Schweißstromimpulse (I_{FVP}) und (I_{sold}) für jeden zu verschweißenden Punkt, unter Einstellung **durch** Erhöhung, bei jeder Wiederholung, des Wertes des ersten Schweißstromimpulses (I_{FVP}), bei der Spannungsprofilüberwachung, **durch** schrittweise Erhöhung des Spannungswertes bis der genannte erste Schweißstromimpuls (I_{FVP}) einen Energiewert bei einer endgültigen Einstellung erreicht, der dem genannten gegebenen Schweißstromimpuls (I_{sold}) gleich ist; und
- das Anlegen auf den genannten zu verschweißenden Metallelementen, bei den nachfolgenden Schweißnähten der genannten Schweißabfolge, eines Schweißstromimpulses für jeden Punkt mit einem Schweißstromintensitätswert, der dem Schweißstromimpuls (I_{FVP}) bei der Spannungsprofilüberwachung der genannten endgültigen Einstellung entspricht,
wobei der erste Schweißstromimpuls (I_{FVP}) während der genannten Wiederholungen bei der Spannungsprofilüberwachung aus Spannungskurven erhalten wird, welche vorzugsweise eine Polynomfunktion zweiten Grades folgen.

## Revendications

1. Procédé d'optimisation des paramètres de soudage par résistance, le procédé comportant l'application d'une impulsion de courant de soudage d'une certaine intensité (I_{sold}) pendant un certain temps (t_{sold}) à des éléments métalliques superposés à souder et en une série de points préétablis d'une séquence de soudage par points par résistance, dans lequel le procédé est **caractérisé en ce qu'**il comprend, basé sur une certaine impulsion de courant (I_{sold}) offrant un soudage jugé correct, effectuer les actions suivantes:
- appliquer deux impulsions de courant de soudage successives à chaque point suivant de la séquence de soudage:
une première impulsion de courant de soudage (I_{FVP}) obtenue par une énergie d'alimentation contrôlant le profil de la tension qui est inférieure à l'énergie fournie par cette certaine impulsion (I_{sold}), et
une deuxième impulsion de courant de soudage coïncidant avec cette certaine impulsion (I_{sold});
- répéter cette application de deux impulsions de courant successives (I_{FVP}) et (I_{sold}) pour chaque point à souder, en réglant en l'accroissant à chaque répétition la valeur de la première impulsion de courant (I_{FVP}), en contrôlant le profil de la tension, en accroissant la valeur de la tension pas à pas jusqu'à ce que cette première impulsion de courant de soudage (I_{FVP}) arrive a une valeur d'énergie dans un réglage final équivalant à cette certaine impulsion de soudage (I_{sold}); et
- appliquer à ces éléments métalliques à souder, dans les soudages suivants de cette séquence de soudage, une impulsion de courant de soudage pour chaque point ayant une valeur d'intensité de tension correspondant à l'impulsion de courant de soudage (I_{FVP}) dans le contrôle du profil de tension de ce réglage final dans lequel la première impulsion de courant de soudage (I_{FVP}) tout le long de ces répétitions de contrôle du profil de tension est obtenue des courbes de tension suivant de préférence une fonction polynomiale de degré 2.

2. Le procédé conformément à la revendication 1, **caractérisé en ce que** l'énergie fournie par cette impulsion de courant de soudage (I_{sold}) et cette certaine période de temps (t_{sold}) sont stockées dans une mémoire d'un dispositif informatique avant d'appliquer les paires d'impulsions de courant de soudage successives, (I_{sold}) et (I_{FVP}) en répétition.

3. Le procédé conformément à une quelconque des revendications précédentes, **caractérisé en ce que** la première impulsion de soudage (I_{FVP}) est appliquée avec une réduction de la durée d'environ 10% par rapport à cette période de temps (t_{sold}).

4. Le procédé conformément à une quelconque des revendications 1 ou 2, **caractérisé en ce que** la première impulsion de courant de soudage (I_{FVP}) est appliquée avec une réduction de la durée de 10% par rapport à cette période de temps (t_{sold}).

5. Le procédé conformément à la revendication 1 ou 2, **caractérisé en ce que** cette valeur équivalente à laquelle est arrivée la première impulsion de courant de soudage (I_{FVP}) après plusieurs répétitions est comprise dans une fourchette de -5% à +10% de la valeur de l'énergie fournie par cette certaine impulsion de courant de soudage (I_{sold}).

6. Le procédé conformément à une quelconque des revendications 1 à 4, **caractérisé en ce qu'**il comporte effectuer cette répétition des deux impulsions de courant de soudage jusqu'à 10 fois maximum.

7. Le procédé conformément à la revendication 6, **caractérisé en ce qu'**il comporte effectuer cette répétition des deux impulsions de courant successives de 3 à 6 fois.

8. Le procédé conformément à une quelconque des revendications 1 à 4, **caractérisé en ce que** les paires d'impulsions de courant de soudage successives (I_{sold}) et (I_{FVP}) sont appliquées avec un intervalle de temps entre elles qui est en fonction des temps de refroidissement, connus comme temps de refroidissement et temps de serrage, qui sont standards pour la séquence de soudage.

9. Le procédé conformément à une quelconque des revendications précédentes, **caractérisé en ce que** les éléments métalliques à souder comprennent un matériau en acier.

10. Le procédé conformément à la revendication 9, **caractérisé en ce que** les pièces à souder comprennent deux ou plusieurs lames superposées.

11. Un programme informatique comportant des instructions de codes qui, lorsqu'il fonctionne dans un ordinateur, met en place une méthode d'optimisation des paramètres de soudage par résistance en appliquant une impulsion de courant de soudage d'une certaine intensité (I_{sold}) pendant une certaine période de temps (t_{sold}) à des éléments métalliques superposés à souder et dans une série de points préétablis d'une séquence de soudage par point par résistance, basée sur une certaine impulsion de courant (I_{sold}) fournissant une soudure qui est jugée correcte, **caractérisé en ce qu'**en effectuant les actions suivantes:
- appliquer deux impulsions de courant de soudage successives à chaque point suivant de la séquence de soudage:
une première impulsion de courant de soudage (I_{FVP}) obtenue par une énergie d'alimentation contrôlant le profil de la tension qui est inférieure à l'énergie fournie par cette certaine impulsion (I_{sold}), et
une deuxième impulsion de courant de soudage coïncidant avec cette certaine impulsion (I_{sold});
- répéter cette application de deux impulsions de courant successives (I_{FVP}) et (I_{sold}) pour chaque point à souder, en réglant en l'accroissant à chaque répétition la valeur de la première impulsion de courant (I_{FVP}), en contrôlant le profil de la tension, en accroissant la valeur de la tension pas à pas jusqu'à ce que cette première impulsion de courant de soudage (I_{FVP}) arrive a une valeur d'énergie dans un réglage final équivalant à cette certaine impulsion de soudage (I_{sold}); et
- appliquer ces éléments métalliques à souder, dans les soudages suivants de cette séquence de soudage, une impulsion de courant de soudage pour chaque point ayant une valeur d'intensité de tension correspondant à l'impulsion de courant de soudage (I_{FVP}) dans le profil de tension contrôlant ce réglage final,
dans lequel la première impulsion de courant de soudage (I_{FVP}) tout le long de ces répétitions dans le contrôle du profil de tension est obtenu des courbes de tension suivant de préférence une fonction polynomiale de degré 2.
